# EUROPÄISCHE PATENTSCHRIFT

(11) **EP 3 061 564 B1**
(45) Veröffentlichungstag und Bekanntmachung des Hinweises auf die Patenterteilung: **05.02.2020**
(21) Anmeldenummer: 15201656.4
(22) Anmeldetag: 21.12.2015
(51) Int. Cl.: B23C 3/16, B23Q 39/00

(54) **FRÄSVORRICHTUNG UND VERFAHREN FÜR DIE BRILLENGLASFERTIGUNG MIT ZWEI FRÄSSTATIONEN**
MILLING DEVICE AND METHOD FOR SPECTACLE GLASS MANUFACTURING WITH TWO MILLING STATIONS
DISPOSITIF DE FRAISAGE ET PROCEDE POUR LA FABRICATION DE VERRE DE LUNETTE COMPRENANT DEUX STATIONS DE FRAISAGE

(30) Priorität: 27.02.2015 DE 102015102899
(43) Veröffentlichungstag der Anmeldung: 31.08.2016
(73) Patentinhaber: Optotech Optikmaschinen GmbH, 35435 Wettenberg/Launsbach (DE)
(72) Erfinder: Mandler, Roland, 35452 Heuchelheim (DE)
(74) Vertreter: Patentanwälte Olbricht Buchhold Keulertz

(56) Entgegenhaltungen:
- EP-A1- 1 559 508
- EP-A1- 1 719 582
- EP-A1- 2 161 098
- WO-A1-2005/005098
- DE-A1-102007 042 667
- DE-A1-102012 101 581
- US-A1- 2011 256 806
- US-B2- 6 568 990

## Beschreibung

Die Erfindung betrifft eine Fräsvorrichtung zur Herstellung von Brillengläsern bzw. zum Vorfräsen von Linsenrohlingen gemäß dem Oberbegriff von Anspruch 1 und ein Verfahren zum Betrieb einer solchen Fräsvorrichtung. Eine derartige Fräsvorrichtung ist aus der Patentschrift US 6 568 990 B2 bekannt.

Im Stand der Technik werden zur Herstellung von Brillengläsern Linsenrohlinge eingesetzt, insbesondere Linsenrohlinge aus Kunststoffen wie Polycarbonat, CR39 und sogenannten "High Index" Materialien. Die Linsenrohlinge werden zur Herstellung einer individuellen Oberfläche, z.B. zur Herstellung von Brillengläsern auf Rezept, aus Effizienzgründen zweistufig spanend bearbeitet, nämlich erst mit einem Fräswerkzeug und anschließend mit einem Drehwerkzeug.

Es existieren kombinierte Fräs-Dreh-Werkzeuge [EP 1 291 106 A] und Maschinen mit separaten Fräs- und (linear oder rotativ arbeitenden) Dreh-Bearbeitungseinheiten. Bei letzteren werden die Brillengläser entweder seriell bearbeitet [EP 1 719 585 A] - ein und dasselbe Brillenglas wird im Arbeitsraum der Maschine zuerst gefräst und anschließend gedreht - oder parallel bearbeitet [EP 1 719 582 A1] - verschiedene Brillenglaser werden im Arbeitsraum der Maschine zugleich bearbeitet, wobei eines gefräst wird, während das andere gedreht wird -.

So ist beispielsweise eine Fertigungseinrichtung aus DE 20 2006 021 076 U1 bekannt, bei der eine Maschine auf einem Maschinengestell eine Werkstückaufnahme auf einem Schlitten, ein Fräswerkzeug und zwei Drehwerkzeuge aufweist. Die Werkstückaufnahme nimmt einen Linsenrohling mittelbar über ein Blockstück auf. Es ist jedoch auch eine unmittelbare Aufnahme ohne Blockstück denkbar. Die Werkstückaufnahme wird mit dem Schlitten zunächst in einen Arbeitsbereich des Fräswerkzeugs gefahren und der aufgenommene Linsenrohling fräsend bearbeitet. Anschließend wird die Werkstückaufnahme in einen Arbeitsbereich des ersten Drehwerkzeugs gefahren und der Linsenrohling drehend bearbeitet. Danach wird die Werkstückaufnahme in einen Arbeitsbereich des zweiten Drehwerkzeugs gefahren und der Linsenrohling ein weiteres Mal drehend bearbeitet. Hierdurch sind eine sphärische, asphärische, torische, atorische, progressive oder Freiformgeometrien erzeugbar. In der Regel schließen sich an die spanende Bearbeitung Feinschleif- oder Polierprozesse zur Erzielung der notwendigen Oberflächengüte an. Bei Bedarf erfolgen auch noch Beschichtungen und/oder Verfestigungsschritte.

Nachteilhaft an einer Vorrichtung gemäß DE 20 2006 021 076 U1 ist, dass nur wenige Linsenrohlinge pro Zeiteinheit bearbeitbar sind. Hierdurch sind die Herstellkosten pro bearbeiteten Linsenrohling hoch.

Die Vorrichtung nach EP 1 719 582 A1 unterscheidet sich unter anderem dadurch von DE 20 2006 021 076 U1, dass die Dreheinheit eine Werkstückspindel und die Fräseinheit eine separate Werkstückaufnahme aufweisen. Hierdurch wird erreicht, dass zwei Linsenrohlinge gleichzeitig bearbeitet werden, nämlich eines mit dem Fräswerkzeug und eines mit dem Drehwerkzeug. Mittels einer Ladeeinrichtung wird der gefräste Linsenrohling aus der Werkstückaufnahme entnommen und unmittelbar anschließend in die Werkstückspindel eingesetzt, während gleichzeitig ein neuer Linsenrohling in die Werkstückaufnahme eingesetzt wird.

Hierdurch wird die Effizienz der Fertigungseinrichtung gesteigert und die Herstellkosten pro bearbeiteten Linsenrohling gegenüber DE 20 2006 021 076 U1 gesenkt. Allerdings ist die Effizienz immer noch gering und die Herstellkosten pro bearbeiteten Linsenrohling hoch.

Außerdem werden Schwingungen von der Fräseinheit auf die Dreheinheit übertragen, wodurch die Präzision des Drehprozesses gering ist.

Aufgabe der Erfindung ist es, die Nachteile des Standes der Technik zu beseitigen, und eine Fräsvorrichtung sowie ein Verfahren bereitzustellen, mit denen jeweils eine qualitativ hochwertige Vorbearbeitung der Linsenrohlinge, eine Steigerung der Effizienz und eine Senkung der Herstellkosten pro bearbeitetem Linsenrohling erreicht werden. Die Erfindung soll zuverlässig, einfach in der Handhabung und kostengünstig sein.

Hauptmerkmale der Erfindung sind im kennzeichnenden Teil von Anspruch 1 und Anspruch 10 angegeben.

Die Erfindung betrifft eine Fräsvorrichtung gemäß Anspruch 1.

Vorteilhaft an der erfindungsgemäßen Fräsvorrichtung ist, dass durch die vorgesehenen wenigstens zwei Frässtationen gleichzeitig zumindest zwei Linsenrohlinge simultan fräsend bearbeitet werden können. Dies führt zu einer besonders hohen Effizienz der Fräsvorrichtung und geringen Herstellungskosten pro bearbeiteten Linsenrohling. Sofern mehr als zwei Frässtationen vorgesehen werden, z.B. bis zu sechs Stück, steigt die Effizienz weiter. Trotzdem bleibt die Fräsvorrichtung sehr kompakt. Die Fräsvorrichtung weist vorzugsweise eine CNC-Steuerung auf, um möglichst automatisiert arbeiten zu können.

Die Werkstückspindeln der Fräsvorrichtung weisen einen gemeinsamen Linearantrieb auf mit dem der Abstand der Werkstückspindeln in Richtung der Spindelachsen relativ zu den Fräswerkzeugen veränderbar ist. Mithin ist nur ein Linearantrieb notwendig, insbesondere wenn die Werkstückspindeln auf einem gemeinsamen Längsschlitten gelagert sind. Dies ist kostengünstig.

Alternativ hierzu weist die Fräsvorrichtung eine Ladevorrichtung auf, die dazu ausgestaltet ist, Linsenrohlinge in die Werkstückspindeln zu laden. Damit ist das Laden automatisiert und einfach durchführbar. Bevorzugt entlädt die Ladevorrichtung die Werkstückspindeln zusätzlich.

Die Erfindung sieht zudem vor, dass die Werkstückspindeln und die Fräswerkzeuge der Fräsvorrichtung zum Laden und Entladen der Werkstückspindeln mit Linsenrohlingen derart versetzt zueinander positionierbar sind, dass ein Linsenrohling zwischen den Fräswerkzeugen hindurchführbar ist. Das Hindurchführen erfolgt optional mittels der Werkstückspindeln und dem Linearantrieb oder durch die Ladevorrichtung. Hierdurch ist die Fräsvorrichtung besonders kompakt, denn es wird durch eine möglichst kleine Relativbewegung der notwendige Raum zum Beladen der Werkstückspindeln freigegeben.

In einer Variante der Fräsvorrichtung ist vorgesehen, dass die Frässtationen, vorzugsweise die Fräswerkzeuge, einen gemeinsamen Querantrieb aufweisen, mit dem der Abstand der Fräsachsen relativ zu den Spindelachsen veränderbar ist, bevorzugt quer zur Spindelachse bzw. durch eine Verschiebung parallel zur Ebene der Spindelachsen. Mithin können die Frässtationen platzsparend nebeneinander angeordnet werden, denn Kollisionen der Fräswerkzeuge werden vermieden, insbesondere wenn diese auf einem gemeinsamen Frässchlitten angeordnet sind. Ein gemeinsamer Querantrieb ist zudem kostengünstig realisierbar. Bevorzugt weist jedes Fräswerkzeug einen eigenen Antriebsmotor auf. Dieser kann ebenfalls auf dem Frässchlitten montiert sein. In einer optionalen Ausgestaltung sind die Werkstückspindeln, insbesondere die Aufnahmen für die Linsenrohlinge, in einer gemeinsamen Ebene spindelbar angeordnet. Hierdurch ergibt sich eine kompakte Ausgestaltung der Fräsvorrichtung.

Ferner bietet es sich an, die Fräsachsen in einem Winkel zwischen 30 Grad und 87 Grad schräg zu den Spindelachsen auszurichten, vorzugsweise in einem Winkel zwischen 50 Grad und 85 Grad, weiter bevorzugt zwischen 65 Grad und 82 Grad, und besonders bevorzugt zwischen 70 Grad und 80 Grad. In diesem Winkelbereich gelingt mit den Schneiden eine hochwertige Oberflächenbearbeitung am Linsenrohling. Je nach Fräskopf sollte der optimale Winkel gewählt werden.

In einer speziellen Ausbildung der Fräsvorrichtung entspricht der Abstand zwischen den Spindelachsen dem Abstand zwischen den Fräsachsen. Hierdurch gelingt eine simultane spanende Bearbeitung von zwei Linsenrohlingen, sodass eine hohe Fertigungsgeschwindigkeit erreicht wird.

Des Weiteren ist nach einer Variante der Erfindung vorgesehen, dass die Schneiden auf der in Richtung der Werkstückspindeln weisenden Seite der Fräsachsen in der Ebene der Spindelachsen liegen. Damit erfolgt der Eingriff der Schneiden in den Linsenrohling in der Ebene der Spindelachsen und es wird ermöglicht, den Linsenrohling bis ins Zentrum zu bearbeiten.

Vorzugsweise sind die Fräswerkzeuge auf einem gemeinsamen Frässchlitten angeordnet. Hierdurch ist nur ein Antrieb mit nur einer Antriebssteuerung notwendig, um die Fräswerkzeuge zu verfahren. Dies ist kostengünstig und reduziert den Programmieraufwand.

Ergänzend oder optional können die Werkstückspindeln auf einem gemeinsamen Spindelschlitten angeordnet sein. Auch hierdurch werden die notwendigen Antriebseinheiten und damit die Kosten der Fräsvorrichtung gering gehalten.

In einer speziellen Variante der Ladevorrichtung ist pro Frässtation jeweils ein Paar Haltemittel zur Aufnahme von zwei Linsenrohlingen vorgesehen, wobei die Haltemittel der Paare winklig zueinander ausgerichtet und miteinander verbunden sind, und wobei die Paare der Haltemittel um eine gemeinsame Drehachse drehbar gelagert sind. Hierdurch ist ein sehr schneller Austausch von Linsenrohlingen in den Werkstückspindeln möglich. Die Effizienz der Fräsvorrichtung ist so besonders hoch. Solche Paare an Haltemittel bzw. die Drehachse können an einem Transportarm gelagert sein, insbesondere für eine Parallelverschiebung der Drehachse. Für die winklige Verbindung der Paare bietet sich eine rechtwinklige Anordnung der zwei Haltemittel an. Bevorzugt ist die Drehachse senkrecht zu den Spindelachsen der Werkstückspindeln ausgerichtet. Außerdem entspricht der Abstand zwischen den Paaren der Haltemittel vorzugsweise dem Abstand zwischen den Spindelachsen. Damit sind nur wenige Bewegungsabläufe für einen schnellen Linsenrohlingswechsel durchzuführen und entsprechend wenig Aktuatoren notwendig.

Die Erfindung betrifft außerdem ein Verfahren gemäß Anspruch 10 zum Betrieb einer zuvor beschriebenen Fräsvorrichtung.

An das Verfahren kann sich optional ein Laden eines dritten und eines vierten Linsenrohlings in die Werkstückspindeln anschließen und die Schritte der spanenden Bearbeitung und der Entnahme wiederholt werden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer Fräsvorrichtung mit Maschinenbett und Gehäuse;
- Fig. 2: eine perspektivische Ansicht einer Fräsvorrichtung bei entferntem Gehäuse;
- Fig. 3: eine perspektivische Ansicht einer Fräsvorrichtung bei etwas weniger entferntem Gehäuse; und
- Fig. 4: eine Seitenansicht einer Fräsvorrichtung bei entferntem Gehäuse.

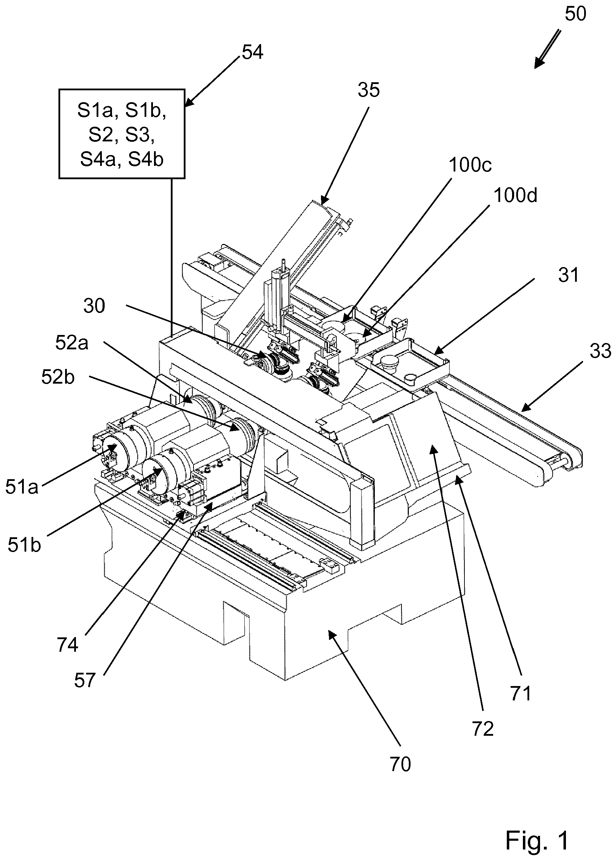

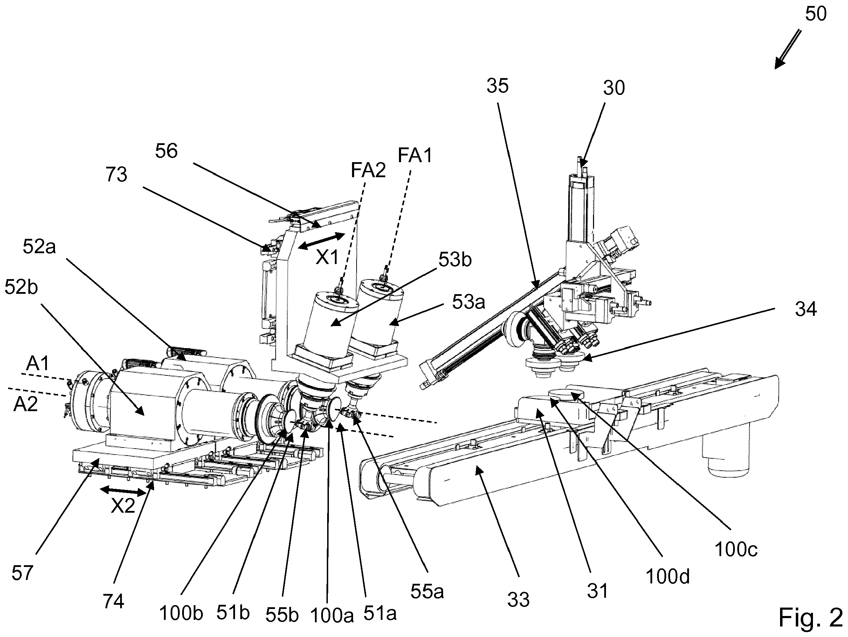

Die Fig. 1, 2, 3 und 4 zeigen aus unterschiedlichen perspektivischen Ansichten Fräsvorrichtungen 50, welche jeweils über eine erste und eine zweite Frässtation 51a, 51b verfügen. Nicht alle technischen Merkmale und damit auch nicht alle Bezugszeichen sind in jeder der Figuren 1 bis 4 sichtbar. Außerdem zeigt Fig. 2 einen erweiterten Maschinentyp einer Fräsvorrichtung 50 sowie die Fig. 2 bis 4 einen gleichen zweiten Maschinentyp.

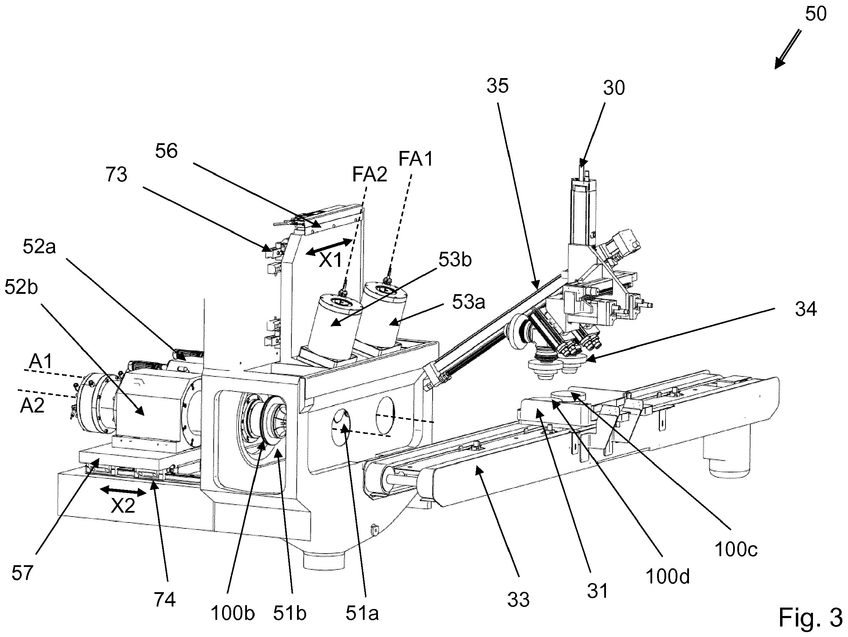

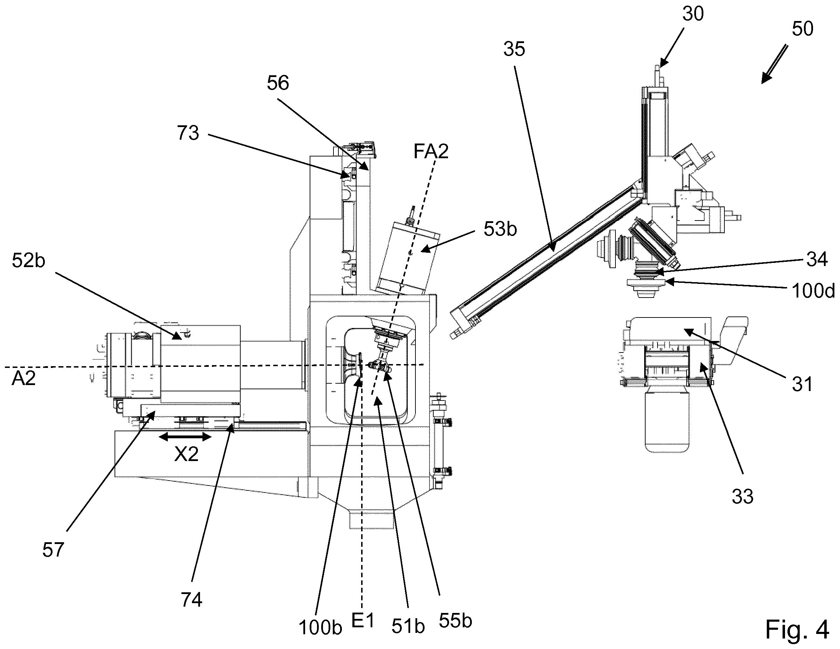

Allen Fräsvorrichtungen 50 nach den Fig. 1 bis 4 ist gemein, dass die erste Frässtation 51a (nur in Fig. 1 bis 3 erkennbar) über eine drehbare erste Werkstückspindel 52a (nur in Fig. 1 bis 3 erkennbar) zur Aufnahme eines ersten Linsenrohlings 100a (nur in Fig. 2 erkennbar) und ein erstes Fräswerkzeug 53a (nur in Fig. 2 und 3 erkennbar) zur spanenden Bearbeitung des aufgenommenen Linsenrohlings 100a verfügen. Gleichzeitig weist die zweite Frässtation 51b eine drehbare zweite Werkstückspindel 52b zur Aufnahme eines zweiten Linsenrohlings 100b (nur in Fig. 2 bis 4 erkennbar) und ein zweites Fräswerkzeug 53b (nur in Fig. 2 bis 4 erkennbar) zur spanenden Bearbeitung des aufgenommenen zweiten Linsenrohlings 100b auf. Dabei haben die erste und die zweite Werkstückspindel 52a, 52b parallel ausgerichtete Spindelachsen A1, A2. Außerdem sind die erste und die zweite Werkstückspindel 52a, 52b in einer gemeinsamen Spindelebene E1 (nur in Fig. 4 eingezeichnet) angeordnet.

Die erste Werkstückspindel 52a ist um eine erste Spindelachse A1 (vgl. Fig. 2 und 3) und die zweite Werkstückspindel 52b um eine zweite Spindelachse A2 (vgl. Fig. 2 bis 4) drehbar. Das erste Fräswerkzeug 53a verfügt über erste Schneiden 55a (nur in Fig. 2 erkennbar), die um eine erste Fräsachse FA1 (nur in Fig. 2 und 3 erkennbar) rotierbar angetrieben sind. Entsprechend ist auch das zweite Fräswerkzeug 53b mit zweiten Schneiden 55b (siehe Fig. 2 und 4) ausgestattet, die um eine zweite Fräsachse FA2 (vgl. Fig. 2 bis 4) rotierbar angetrieben sind. Dabei sind die Spindelachsen A1, A2 parallel zueinander ausgerichtet, die Fräsachsen FA1, FA2 parallel zueinander ausgerichtet, sowie die Fräsachsen FA1, FA2 schräg zu den Spindelachsen A1, A2 ausgerichtet. Der Winkel zwischen der Ebene der Spindelachsen A1, A2 und der Ebene der Fräsachsen FA1, FA2 beträgt zwischen 30 Grad und 87 Grad, vorzugsweise zwischen 50 Grad und 85 Grad, weiter bevorzugt zwischen 65 Grad und 82 Grad, besonders bevorzugt zwischen 70 Grad und 80 Grad, und vorliegend 75 Grad. Des Weiteren beträgt der Abstand zwischen den Spindelachsen A1, A2 dem Abstand zwischen den Fräsachsen FA1, FA2. Man erkennt in Fig. 4 zudem, dass die Schneiden 55b auf der in Richtung der Werkstückspindeln 52b weisenden Seite der Fräsachsen FA2 in der Ebene der Spindelachsen A2 liegen.

Die Frässtationen 51a, 51b sind vom gleichen Typ und zur Bearbeitung von Linsenrohlingen 100a, 100b des gleichen Typs ausgebildet. Insbesondere sind die Werkstückspindeln 51a, 51b (weitestgehend) identisch ausgestaltet sowie die Fräswerkzeuge 53a, 53b (weitestgehend) identisch ausgestaltet. Ausgenommen sind konstruktionsbedingte Abweichungen von Verbindungen und Anschlüssen.

Die erste und zweite Werkstückspindel 52a, 52b der beiden Frässtationen 51a, 51b sind auf einem gemeinsamen Maschinenbett 70 (nur in Fig. 1 dargestellt) montiert, welches insbesondere monolithisch ausgebildet ist. Außerdem verfügen die beiden Frässtationen 51a, 51b über einen gemeinsamen Längsantrieb 74, mit dem der Abstand X2 (siehe Fig. 2 bis 4) der Werkstückspindeln 52a, 52b gegenüber den Fräswerkzeugen 53a, 53b veränderbar ist. Hierfür sind die erste und die zweite Werkstückspindel 52a, 52b auf einem gemeinsamen Spindelschlitten 57 montiert.

Zusätzlich haben die Frässtationen 51a, 51b, insbesondere die Fräswerkzeuge 53a, 53b, einen gemeinsamen Querantrieb 73, mit dem der Abstand X1 der Fräsachsen FA1, FA2 relativ zu den Spindelachsen A1, A2 veränderbar ist. Dafür sind die beiden Fräswerkzeuge 53a, 53b auf einem gemeinsamen Frässchlitten 56 (siehe Fig. 2 bis 4) montiert bzw. gelagert.

Zur Bearbeitung der Linsenrohlinge 100a, 100b können die Fräswerkzeuge 53a, 53b durch Bewegung des Querschlittens 56 entlang der Richtung X1 über jeweils einen Linsenrohling 100a, 100b geführt werden, insbesondere auch über dessen Zentrum. Zur Herstellung gewünschter Oberflächengeometrien auf den Linsenrohlingen 100a, 100b wird gleichzeitig der Abstand X2 mit dem Spindelschlitten 57 moduliert, während die Linsenrohlinge 100a, 100b um die Spindelachsen A1, A2 rotiert werden. Hierzu weist die Fräsvorrichtung 50 eine Steuerelektronik 54 (nur in Fig. 1 schematisch angedeutet) zur Ausgabe von Antriebssignalen S1a, S1b, S2, S3, S4a, S4b an die Werkstückspindeln 52a, 52b, den Querantrieb 73, den Linearantrieb 74 und die Fräswerkzeuge 53a, 53b auf, welche aufeinander abgestimmt sind.

Des Weiteren ist in den Fig. 1 bis 4 jeweils eine Ladevorrichtung 30 vorgesehen, die dazu ausgestaltet ist, Linsenrohlinge 100a, 100b, 100c, 100d in die Werkstückspindeln 52a, 52b zu laden. Hierfür verfügt die Ladevorrichtung 30 über Transportmittel 31, die hier insbesondere in Form von Transportschalen ausgeführt sind. Diese nehmen jeweils ein Paar Linsenrohlinge auf. Hierdurch bleibt ein Linsenpaar entlang der Fertigungsstrecke gebündelt und kann den einzelnen Bearbeitungsstationen jeweils als Paar zugeführt werden, z.B. einem Drehwerkzeug, einem Polierwerkzeug, Beschichtungsanlagen und Auf- und Abblockstationen. Die Transportmittel 31 sind auf einer Förderschiene 33 geführt. Mittels Haltemitteln 34 (nur in den Fig. 2 bis 4 gekennzeichnet) an einem Transportarm 35 können die Linsenrohlinge aus den Transportmitteln 31 entnommen und den Werkstückspindeln 52a, 52b zugeführt werden.

Eine Besonderheit der Fräsvorrichtung 50 ist, dass die Werkstückspindeln 52a, 52b und die Fräswerkzeuge 53a, 53b derart versetzt zueinander positionierbar sind, dass die Ladevorrichtung 30 einen Linsenrohling 100a, 100b, 100c, 100d zwischen den Fräswerkzeugen 53a, 53b hindurchführen kann. Eine besonders hohe Kompaktheit der Fräsvorrichtung 50 wird erreicht, wenn die eine der Fräsachsen FA1, FA2 zum Be- und Entladen mittig zwischen den Spindelachsen A1, A2 positioniert ist.

Die Haltemittel 34 haben jeweils Saugköpfe zum Halten der Linsenrohlinge 100a, 100b, 100c, 100d. Die optionale und spezielle Ausgestaltung der Ladevorrichtung 30 sieht vor, dass vier Haltemittel 34 an dem Transportarm 35 gelagert sind. Jeweils zwei der vier Haltemittel 34 sind winklig miteinander verbunden, hier insbesondere rechtwinklig. Beide Paare der Haltemittel 34 sind um eine gemeinsame Drehachse drehbar gelagert. Die Drehachse ist senkrecht zu den Spindelachsen A1, A2 ausgerichtet. Außerdem entspricht der Abstand zwischen den Paaren der Haltemittel 34 dem Abstand zwischen den Spindelachsen A1, A2.

Mit dieser Anordnung der Ladevorrichtung 30 ist es möglich, gleichzeitig zwei vorgefräste Linsenrohlinge 100a, 100b, 100c, 100d aufzunehmen, insbesondere jeweils einen Linsenrohling 100c, 100d pro Paar der Haltemittel 34. Mit den beiden freien Haltemitteln 34 sind dann zwei Linsenrohlinge 100a, 100b aus den Werkstückspindeln 52a, 52b entnehmbar. Nach Rotation der Haltemittelpaare um 90 Grad sind die zuvor aufgenommenen Linsenrohlinge 100c, 100d in die Werkstückspindeln 52a, 52b ladbar. Die fertig gedrehten Linsenrohlinge 100a, 100b werden dann in dem freien Transportmittel 31 abgelegt. Zwei neue vorgefräste Linsenrohlinge werden anschließend mit einem weiteren Transportmittel 31 bereitgestellt und können mit den Haltemitteln 34 aufgenommen werden. Das Be- und Entladen der Werkstückspindeln 52a, 52b ist so besonders schnell und die Effizienz der Fräsvorrichtung 50 hoch. Es versteht sich, dass der Drehwinkel der Haltemittelpaare von deren Schenkelwinkel abhängt und nicht exakt 90 Grad betragen muss.

Mit der Förderschiene 33 ist die Fräsvorrichtung 50 auf einfache Weise mit anderen Maschinen verbindbar, zum Beispiel mit Drehvorrichtungen und/oder Beschichtungsvorrichtungen. Die Ladevorrichtung 30 oder Teile hiervon sollte mit dem Maschinenbett 70 verbunden sein. Eine feste Verbindung mit dem Maschinenbett 70 sollte insbesondere der Transportarm 35 haben. Hierdurch ist dieser exakt relativ zu den Werkstückspindeln 52a, 52b ausgerichtet. Die Förderschiene wird vorzugsweise schwingungsentkoppelt mit dem Maschinenbett 70 oder mit dem Boden verbunden.

Wie man in Fig. 1 sieht, sind die beiden Frässtationen 51a, 51b der Fräsvorrichtung 50 in einer gemeinsamen Fertigungszelle 71 angeordnet. Die Fertigungszelle 71 wird von einer Gehäusehülle 72 ausgebildet. Zwischen den Frässtationen 51a, 51b liegt nur ein Freiraum, jedoch keine mechanischen Elemente. Spanschilder oder dergleichen sind jedoch optional vorsehbar. Der Transportarm 35 verbindet die Förderschiene 33 außerhalb der Fertigungszelle 71 mit den innerhalb der Fertigungszelle 71 angeordneten Werkstückspindeln 52a, 52b.

Gegenüber den Fig. 1 und 3 ist die Fräsvorrichtung nach Fig. 1 um eine weitere Bewegungsachse der Werkstückspindeln 51a, 51b ergänzt. Der Spindelschlitten 57 ist hier auf einem querlaufenden Unterschlitten gelagert, sodass sich eine Kreuzschlittenanordnung ergibt. Diese ermöglicht ein seitliches Herausfahren der Werkstückspindeln 51a, 51b aus dem Arbeitsbereich der Frässtationen 51a, 51b.

Die Erfindung ist nicht auf eine der vorbeschriebenen Ausführungsformen beschränkt, sondern durch die nachfolgenden Ansprüche definiert.

**Bezugszeichenliste**

| | | | |
|---|---|---|---|
| 30 | Ladevorrichtung | A1 | Spindelachse (erste |
| 31 | Transportmittel | | Werkstückspindel) |
| 33 | Förderschiene | A2 | Spindelachse (zweite |
| 34 | Haltemittel | | Werkstückspindel) |
| 35 | Transportarm | E1 | Spindelebene (Werkstückspindeln) |
| 50 | Fräsvorrichtung | FA1 | Fräsachse (erstes Fräswerkzeug) |
| 51a | erste Frässtation | | |
| 51b | zweite Frässtation | FA2 | Fräsachse (zweites Fräswerkzeug) |
| 52a | erste Werkstückspindel | | |
| 52b | zweite Werkstückspindel | S1a | Antriebssignal (erste Werkstückspindel) |
| 53a | erstes Fräswerkzeug | | |
| 53b | zweites Fräswerkzeug | S1b | Antriebssignal (zweite Werkstückspindel) |
| 54 | Steuerelektronik | | |
| 55a | erste Schneiden | S2 | Antriebssignal (Querantrieb) |
| 55b | zweite Schneiden | S3 | Antriebssignal (Linearantrieb) |
| 56 | Frässchlitten | S4a | Antriebssignal (erstes Fräswerkzeug) |
| 57 | Spindelschlitten | | |
| | | S4b | Antriebssignal (zweites Fräswerkzeug) |
| 70 | Maschinenbett | | |
| 71 | Fertigungszelle | X1 | Abstand (Fräsachse - Spindelachse) |
| 72 | Gehäusehülle | | |
| 73 | Querantrieb | X2 | Abstand (Fräswerkzeug - Werkstückspindel) |
| 74 | Linearantrieb | | |
| | | | |
| 100a | erster Linsenrohling | | |
| 100b | zweiter Linsenrohling | | |
| 100c | dritter Linsenrohling | | |
| 100d | vierter Linsenrohling | | |

## Patentansprüche

1. **Fräsvorrichtung** (50) aufweisend
- eine erste Frässtation (51a) mit
∘ einer um eine erste Spindelachse (A1) drehbaren ersten Werkstückspindel (52a) zur Aufnahme eines ersten Linsenrohlings (100a) und
∘ einem ersten Fräswerkzeug (53a) mit um eine erste Fräsachse (FA1) rotierbaren ersten Schneiden (55a) zur spanenden Bearbeitung eines aufgenommenen ersten Linsenrohlings (100a),
- wenigstens eine zweite Frässtation (51b) mit
∘ einer um eine zweite Spindelachse (A2) drehbaren zweiten Werkstückspindel (52b) zur Aufnahme eines zweiten Linsenrohlings (100b) und
∘ einem zweiten Fräswerkzeug (53b) mit um eine zweite Fräsachse (FA2) rotierbaren zweiten Schneiden (55b) zur spanenden Bearbeitung eines aufgenommenen zweiten Linsenrohlings (100b),
- wobei die Spindelachsen (A1, A2) parallel zueinander ausgerichtet sind,
- wobei die Fräsachsen (FA1, FA2) parallel zueinander ausgerichtet sind, und
- wobei die Fräsachsen (FA1, FA2) schräg zu den Spindelachsen (A1, A2) ausgerichtet sind,
- wobei die Werkstückspindeln (52a, 52b) und die Fräswerkzeuge (53a, 53b) zum Laden und Entladen der Werkstückspindeln (52a, 52b) mit Linsenrohlingen (100a, 100b, 100c, 100d) derart versetzt zueinander positionierbar sind, dass ein Linsenrohling (100a, 100b, 100c, 100d) zwischen den Fräswerkzeugen (53a, 53b) hindurchführbar ist, **dadurch gekennzeichnet, dass**
a) die Frässtationen (51a, 51b) einen gemeinsamen Linearantrieb (74) aufweisen, mit dem der Abstand (X2) der Werkstückspindeln (52a, 52b) in Richtung der Spindelachsen (A1, A2) relativ zu den Fräswerkzeugen (53a, 53b) veränderbar ist, wobei der Linearantrieb (74) und die Werkstückspindeln (52a, 52b) dazu ausgestaltet sind den Linsenrohling (100a, 100b, 100c, 100d) zwischen den Fräswerkzeugen (53a, 53b) hindurchzuführen; oder
b) eine Ladevorrichtung (30) vorgesehen ist, die dazu ausgestaltet ist, Linsenrohlinge (100a, 100b, 100c, 100d) in die Werkstückspindeln (52a, 52b) zu laden und den Linsenrohling (100a, 100b, 100c, 100d) zwischen den Fräswerkzeugen (53a, 53b) hindurchzuführen.

2. Fräsvorrichtung (50) nach Anspruch 1, **dadurch gekennzeichnet, dass** die Frässtationen (51a, 51b) einen gemeinsamen Querantrieb (73) aufweisen, mit dem der Abstand (X1) der Fräsachsen (FA1, FA2) relativ zu den Spindelachsen (A1, A2) veränderbar ist.

3. Fräsvorrichtung (50) nach einem der vorhergehenden Ansprüche, **dadurch gekennzeichnet, dass** Aufnahmen für die Linsenrohlinge (100a, 100b) der Werkstückspindeln (52a, 52b) in einer gemeinsamen Ebene (E1) spindelbar angeordnet sind.

4. Fräsvorrichtung (50) nach einem der vorhergehenden Ansprüche, **dadurch gekennzeichnet, dass** die Fräsachsen (FA1, FA2) in einem Winkel zwischen 30 Grad und 87 Grad schräg zu den Spindelachsen (A1, A2) ausgerichtet sind, vorzugsweise in einem Winkel zwischen 50 Grad und 85 Grad, weiter bevorzugt zwischen 65 Grad und 82 Grad, und besonders bevorzugt zwischen 70 Grad und 80 Grad.

5. Fräsvorrichtung (50) nach einem der vorhergehenden Ansprüche, **dadurch gekennzeichnet, dass** der Abstand zwischen den Spindelachsen (A1, A2) dem Abstand zwischen den Fräsachsen (FA1, FA2) entspricht.

6. Fräsvorrichtung (50) nach einem der vorhergehenden Ansprüche, **dadurch gekennzeichnet, dass** die Schneiden (55a, 55b) auf der in Richtung der Werkstückspindeln (52a, 52b) weisenden Seite der Fräsachsen (FA1, FA2) in der Ebene der Spindelachsen (A1, A2) liegen, sodass der Eingriff der Schneiden (55a, 55b) in die Linsenrohlinge (100a, 100b) in der Ebene der Spindelachsen (A1, A2) erfolgt.

7. Fräsvorrichtung (50) nach einem der vorhergehenden Ansprüche, **dadurch gekennzeichnet, dass** die Fräswerkzeuge (53a, 53b) auf einem gemeinsamen Frässchlitten (56) angeordnet sind.

8. Fräsvorrichtung (50) nach einem der vorhergehenden Ansprüche, **dadurch gekennzeichnet, dass** die Werkstückspindeln (52a, 52b) auf einem gemeinsamen Spindelschlitten (57) angeordnet sind.

9. Fräsvorrichtung (50) nach einem der vorhergehenden Ansprüche, **dadurch gekennzeichnet, dass** die Ladevorrichtung (30) pro Frässtation jeweils ein Paar Haltemittel (34) zur Aufnahme von zwei Linsenrohlingen (100a, 100b, 100c, 100d) aufweist, wobei die Haltemittel (34) der Paare winklig zueinander ausgerichtet und miteinander verbunden sind, und wobei die Paare der Haltemittel um eine gemeinsame Drehachse drehbar gelagert sind.

10. **Verfahren** zum Betrieb einer Fräsvorrichtung (50) nach einem der Ansprüche 1 bis 9, **gekennzeichnet durch** folgende Schritte:
a) Laden eines ersten Linsenrohlings (100a) in die erste Werkstückspindel (52a) und eines zweiten Linsenrohlings (100b) in die zweite Werkstückspindel (52b);
b) Simultane spanende Bearbeitung des ersten Linsenrohlings (100a) mit dem ersten Fräswerkzeug (53a) und des zweiten Linsenrohlings (100b) mit dem zweiten Fräswerkzeug (53b);
c) Anschließende Entnahme des ersten Linsenrohlings (100a) und des zweiten Linsenrohlings (100b) aus den Werkstückspindeln (52a, 52b);
wobei die Werkstückspindeln (52a, 52b) und die Fräswerkzeuge (53a, 53b) zum Laden und Entladen der Werkstückspindeln (52a, 52b) mit Linsenrohlingen (100a, 100b, 100c, 100d) derart versetzt zueinander positioniert sind, dass ein Linsenrohling (100a, 100b, 100c, 100d) zwischen den Fräswerkzeugen (53a, 53b) hindurchführbar ist,
d) wobei die Frässtationen (51a, 51b) einen gemeinsamen Linearantrieb (74) aufweisen, mit dem der Abstand (X2) der Werkstückspindeln (52a, 52b) in Richtung der Spindelachsen (A1, A2) relativ zu den Fräswerkzeugen (53a, 53b) veränderbar ist, und das Hindurchführen des Linsenrohlings (100a, 100b, 100c, 100d) zwischen den Fräswerkzeugen (53a, 53b) mittels der Werkstückspindeln (52a, 52b) und dem Linearantrieb (74) erfolgt; oder
e) wobei eine Ladevorrichtung (30) vorgesehen ist, die dazu ausgestaltet ist, Linsenrohlinge (100a, 100b, 100c, 100d) in die Werkstückspindeln (52a, 52b) zu laden, und das Hindurchführen des Linsenrohlings (100a, 100b, 100c, 100d) zwischen den Fräswerkzeugen (53a, 53b) durch die Ladevorrichtung (30) erfolgt.

## Claims

1. **Milling device** (50) having
- a first milling station (51a) having
- a first workpiece spindle (52a) rotatable about a first spindle axis (A1) for the reception of a first lens blank (100a) and
- a first milling tool (53a) with first cutting edges (55a), rotatable about a first milling axis (FA1), for the chip machining of a received first lens blank (100a),
- at least one second milling station (51b) having
- a second workpiece spindle (52b) rotatable about a second spindle axis (A2) for the reception of a second lens blank (100b) and
- a second milling tool (53b) with second cutting edges (55b), rotatable about a second milling axis (FA2), for the chip machining of a received second lens blank (100b),
- wherein the spindle axes (A1, A2) are aligned parallel to one another,
- wherein the milling axes (FA1, FA2) are aligned parallel to one another, and
- wherein the milling axes (FA1, FA2) are aligned obliquely with regard to the spindle axis (A1, A2),
- wherein the workpiece spindles (52a, 52b) and the milling tools (53a, 53b) for loading and unloading the workpiece spindles (52a, 52b) with lens blanks (100a, 100b, 100c, 100d) are positionable offset with respect to one another such that a lens blank (100a, 100b, 100c, 100d) can be guided through the milling tools (53a, 53b), **characterised in that**
a) the milling stations (51a, 51b) have a shared linear drive (74) with which the spacing (X2) of the workpiece spindles (52a, 52b) in the direction of the spindle axes (A1, A2) relatively to the milling tools (53a, 53b) can be altered, wherein the linear drive (74) and the workpiece spindles (52a, 52b) are designed to guide the lens blank (100a, 100b, 100c, 100d) between the milling tools (53a, 53b); or
b) a loading device (30) is provided, which is designed to load lens blanks (100a, 100b, 100c, 100d) into the workpiece spindles (52a, 52b) and to guide the lens blank (100a, 100b, 100c, 100d) between the milling tools (53a, 53b).

2. Milling device (50) according to claim 1, **characterised in that** the milling stations (51a, 51b) have a shared transverse drive (73) with which the spacing (X1) of the milling axes (FA1, FA2) relatively to the spindle axes (A1, A2) can be altered.

3. Milling device (50) according to any of the preceding claims, **characterised in that** receptacles for the lens blanks (100a, 100b) of the workpiece spindles (52a, 52b) are disposed spindleably in a shared plane (E1).

4. Milling device (50) according to any of the preceding claims, **characterised in that** the milling axes (FA1, FA2) are oriented at an angle between 30 degrees and 87 degrees obliquely to the spindle axes (A1, A2), preferably at an angle between 50 degrees and 85 degrees, more preferably between 65 degrees and 82 degrees, and especially preferably between 70 degrees and 80 degrees.

5. Milling device (50) according to any of the preceding claims, **characterised in that** the spacing between the spindle axes (A1, A2) is equal to the spacing between the milling axes (FA1, FA2).

6. Milling device (50) according to any of the preceding claims, **characterised in that** the cutting edges (55a, 55b) on the side, facing in the direction of the workpiece spindles (52a, 52b), of the milling axes (FA1, FA2) lie on the plane of the spindle axes (A1, A2), such that the engagement of the cutting edges (55a, 55b) into the lens blanks (100a, 100b) takes place on the plane of the spindle axes (A1, A2).

7. Milling device (50) according to any of the preceding claims, **characterised in that** the milling tools (53a, 53b) are disposed on a shared milling carriage (56).

8. Milling device (50) according to any of the preceding claims, **characterised in that** the workpiece spindles (52a, 52b) are disposed on a shared spindle carriage (57).

9. Milling device (50) according to any of the preceding claims, **characterised in that** the loading device (30) has per milling station in each case one pair of holding means (34) for the reception of two lens blanks (100a, 100b, 100c, 100d), wherein the holding means (34) of the pairs are oriented at an angle to one another and are connected with one another, and wherein the pairs of the holding means are rotationally mounted about a shared rotational axis.

10. **Method** for operating a milling device (50) according to any of claims 1 to 9, **characterised by** following steps:
a) loading a first lens blank (100a) into the first workpiece spindle (52a) and a second lens blank (100b) into the second workpiece spindle (52b);
b) simultaneous chip machining of the first lens blank (100a) with the first milling tool (53a) and the second lens blank (100b) with the second milling tool (53b);
c) subsequent removal of the first lens blank (100a) and the second lens blank (100b) out of the workpiece spindles (52a, 52b);
wherein the workpiece spindles (52a, 52b) and the milling tools (53a, 53b) for loading and unloading the workpiece spindles (52a, 52b) with lens blanks (100a, 100b, 100c, 100d) are positioned offset to one another such that a lens blank (100a, 100b, 100c, 100d) can be guided between the milling tools (53a, 53b),
d) wherein the milling stations (51a, 51b) have a shared linear drive (74), with which the spacing (X2) of the workpiece spindles (52a, 52b) in the direction of the spindle axes (A1, A2) relatively to the milling tools (53a, 53b) can be altered, and the guiding of the lens blank (100a, 100b, 100c, 100d) between the milling tools (53a, 53b) by means of the workpiece spindles (52a, 52b) and the linear drive (74) results; or
e) wherein a loading device (30) is provided, which is designed to load lens blanks (100a, 100b, 100c, 100d) into the workpiece spindles (52a, 52b) and the guiding of the lens blank (100a, 100b, 100c, 100d) between the milling tools (53a, 53b) is carried out by the loading device (30).

## Revendications

1. **Dispositif de fraisage** (50) présentant
- une première station de fraisage (51a) avec
- une première broche porte-pièce (52a) pouvant tourner autour d'un premier axe de broche (A1), destinée à loger une première ébauche de lentille (100a) et
- un premier outil de fraisage (53a) avec des premières lames (55a) rotatives autour d'un premier axe de fraisage (FA1) pour l'usinage par enlèvement de copeaux d'une première ébauche de lentille (100a) logée,
- au moins une seconde station de fraisage (51b) avec
- une seconde broche porte-pièce (52b) pouvant tourner autour d'un second axe de broche (A2), destinée à loger une seconde ébauche de lentille (100b) et
- un second outil de fraisage (53b) avec des secondes lames (55b) rotatives autour d'un second axe de fraisage (FA2) pour l'usinage par enlèvement de copeaux d'une seconde ébauche de lentille (100b) logée,
- dans lequel les axes de broche (A1, A2) sont orientés parallèlement l'un à l'autre,
- dans lequel les axes de fraisage (FA1, FA2) sont orientés parallèlement l'un à l'autre, et
- dans lequel les axes de fraisage (FA1, FA2) sont orientés de manière oblique par rapport aux axes de broche (A1, A2),
- dans lequel les broches porte-pièce (52a, 52b) et les outils de fraisage (53a, 53b) destinés à charger et à décharger les broches porte-pièce (52a, 52b) avec des ébauches de lentille (100a, 100b, 100c, 100d) peuvent être positionnés de manière décalée les uns par rapport aux autres, de telle sorte qu'une ébauche de lentille (100a, 100b, 100c, 100d) peut être passée entre les outils de fraisage (53a, 53b), **caractérisé en ce que**
a) les stations de fraisage (51a, 51b) présentent un entraînement linéaire (74) commun, avec lequel l'écart (X2) des broches porte-pièce (52a, 52b) en direction des axes de broche (A1, A2) par rapport aux outils de fraisage (53a, 53b) peut être modifié, dans lequel l'entraînement linéaire (74) et les broches porte-pièce (52a, 52b) sont conçus pour faire passer l'ébauche de lentille (100a, 100b, 100c, 100d) entre les outils de fraisage (53a, 53b) ; ou
b) un dispositif de chargement (30) est prévu, qui est conçu pour charger des ébauches de lentille (100a, 100b, 100c, 100d) dans les broches porte-pièce (52a, 52b) et faire passer l'ébauche de lentille (100a, 100b, 100c, 100d) entre les outils de fraisage (53a, 53b).

2. Dispositif de fraisage (50) selon la revendication 1, **caractérisé en ce que** les stations de fraisage (51a, 51b) présentent un entraînement transversal (73) commun, avec lequel l'écart (X1) des axes de fraisage (FA1, FA2) par rapport aux axes de broche (A1, A2) peut être modifié.

3. Dispositif de fraisage (50) selon l'une quelconque des revendications précédentes, **caractérisé en ce que** des logements pour les ébauches de lentille (100a, 100b) des broches porte-pièce (52a, 52b) sont disposés de manière réglable en hauteur dans un plan (E1) commun.

4. Dispositif de fraisage (50) selon l'une quelconque des revendications précédentes, **caractérisé en ce que** les axes de fraisage (FA1, FA2) sont orientés selon un angle compris entre 30 degrés et 87 degrés de manière oblique par rapport aux axes de broche (A1, A2), de préférence selon un angle compris entre 50 degrés et 85 degrés, plus préférablement entre 65 degrés et 82 degrés, et de manière particulièrement préférée entre 70 degrés et 80 degrés.

5. Dispositif de fraisage (50) selon l'une quelconque des revendications précédentes, **caractérisé en ce que** l'écart entre les axes de broche (A1, A2) correspond à l'écart entre les axes de fraisage (FA1, FA2).

6. Dispositif de fraisage (50) selon l'une quelconque des revendications précédentes, **caractérisé en ce que** les lames (55a, 55b) se situent sur la face des axes de fraisage (FA1, FA2) orientée en direction des broches porte-pièce (52a, 52b) dans le plan des axes de broche (A1, A2), de sorte que l'insertion des lames (55a, 55b) dans les ébauches de lentille (100a, 100b) s'effectue dans le plan des axes de broche (A1, A2).

7. Dispositif de fraisage (50) selon l'une quelconque des revendications précédentes, **caractérisé en ce que** les outils de fraisage (53a, 53b) sont disposés sur un chariot porte-fraise (56) commun.

8. Dispositif de fraisage (50) selon l'une quelconque des revendications précédentes, **caractérisé en ce que** les broches porte-pièce (52a, 52b) sont disposées sur un chariot porte-broche (57) commun.

9. Dispositif de fraisage (50) selon l'une quelconque des revendications précédentes, **caractérisé en ce que** le dispositif de chargement (30) présente par station de fraisage respectivement une paire de moyens de retenue (34) destinés à loger deux ébauches de lentille (100a, 100b, 100c, 100d), dans lequel les moyens de retenue (34) des paires sont orientés de manière angulaire les uns par rapport aux autres et sont reliés les uns aux autres, et dans lequel les paires des moyens de retenue sont montées de manière à pouvoir tourner autour d'un axe de rotation commun.

10. **Procédé** de fonctionnement d'un dispositif de fraisage (50) selon l'une quelconque des revendications 1 à 9, **caractérisé par** les étapes suivantes :
a) le chargement d'une première ébauche de lentille (100a) dans la première broche porte-pièce (52a) et d'une seconde ébauche de lentille (100b) dans la seconde broche porte-pièce (52b) ;
b) l'usinage simultané par enlèvement de copeaux de la première ébauche de lentille (100a) avec le premier outil de fraisage (53a) et de la seconde ébauche de lentille (100b) avec le second outil de fraisage (53b) ;
c) le retrait subséquent de la première ébauche de lentille (100a) et de la seconde ébauche de lentille (100b) des broches porte-pièce (52a, 52b) ;
dans lequel les broches porte-pièce (52a, 52b) et les outils de fraisage (53a, 53b) destinés à charger et à décharger les broches porte-pièce (52a, 52b) avec des ébauches de lentille (100a, 100b, 100c, 100d) sont positionnés de manière décalée les uns par rapport aux autres de telle sorte qu'une ébauche de lentille (100a, 100b, 100c, 100d) peut être passée entre les outils de fraisage (53a, 53b),
d) dans lequel les stations de fraisage (51a, 51b) présentent un entraînement linéaire (74) commun, avec lequel l'écart (X2) des broches porte-pièce (52a, 52b) en direction des axes de broche (A1, A2) par rapport aux outils de fraisage (53a, 53b) peut être modifié, et le passage de l'ébauche de lentille (100a, 100b, 100c, 100d) entre les outils de fraisage (53a, 53b) s'effectue au moyen des broches porte-pièce (52a, 52b) et de l'entraînement linéaire (74) ; ou
e) dans lequel un dispositif de chargement (30) est prévu, qui est conçu pour charger des ébauches de lentille (100a, 100b, 100c, 100d) dans les broches porte-pièce (52a, 52b), et le passage de l'ébauche de lentille (100a, 100b, 100c, 100d) entre les outils de fraisage (53a, 53b) s'effectue à l'aide du dispositif de chargement (30).
